# EUROPÄISCHE PATENTSCHRIFT

(11) **EP 4 439 221 B1**
(45) Veröffentlichungstag und Bekanntmachung des Hinweises auf die Patenterteilung: **16.09.2026**
(21) Anmeldenummer: 24163600.0
(22) Anmeldetag: 14.03.2024
(51) Int. Cl.: G05D 1/243, G05D 1/22

(54) **STEUERN EINES BODENROBOTERS BEZÜGLICH EINES OBJEKTS**
CONTROLLING A GROUND ROBOT IN RELATION TO AN OBJECT
PILOTAGE D'UN ROBOT TERRESTRE PAR RAPPORT À UN OBJET

(30) Priorität: 30.03.2023 DE 102023202968
(43) Veröffentlichungstag der Anmeldung: 02.10.2024
(73) Patentinhaber: BSH Hausgeräte GmbH, 81739 München (DE)
(72) Erfinder: Fremerey, Maximilian, 97633 Saal an der Saale (DE); Tharakan, Tone John, 97070 Würzburg (DE); Paul, Ajay, 673122 Wayanad District (IN)

(56) Entgegenhaltungen:
- CN-A- 110 966 982
- US-B2- 9 373 169
- HACHIYA HIROTAKA ET AL: "Distance estimation with 2.5D anchors and its application to robot navigation", ROBOMECH JOURNAL, vol. 5, no. 1, 10 September 2018 (2018-09-10), XP093287746, ISSN: 2197-4225, Retrieved from the Internet <URL:http://link.springer.com/article/10.1186/s40648-018-0119-5/fulltext.html> DOI: 10.1186/s40648-018-0119-5

## Beschreibung

Die vorliegende Erfindung betrifft die Steuerung eines Bodenroboters. Insbesondere betrifft die Erfindung die Bestimmung eines Abstands zwischen einem Objekt und dem Bodenroboter.

Ein Bodenroboter ist dazu eingerichtet, eine Bodenfläche zu befahren und zu bearbeiten. Beispielsweise kann der Bodenroboter in einem Haushalt dazu eingesetzt werden, die Bodenfläche automatisch zu reinigen. Die Reinigung kann beispielsweise trocken durch Saugen oder feucht durch Wischen erfolgen. Zur Navigation des Roboters wird üblicherweise ein SLAM-Algorithmus (Simultaneous Localisation And Mapping) verwendet, für den ein Umfeld des Bodenroboters abgetastet wird. Landmarken auf der Abtastung können mit bekannten Landmarken korreliert werden, sodass eine Position des Bodenroboters bestimmt werden kann. Gleichzeitig können die bekannten Landmarken aktualisiert oder korrigiert werden.

Befindet sich ein Objekt im Umfeld des Bodenroboters, beispielsweise ein Dekorationsartikel, ein Spielzeug oder ein Möbel, so kann der Bodenroboter im Wesentlichen auf zwei Weisen darauf reagieren. In einer ersten Variante kann er seine Fahrgeschwindigkeit reduzieren und sanft gegen das Objekt fahren, um die Bodenfläche möglichst bis zu dem Objekt bearbeiten zu können. In einer zweiten Variante kann der Bodenroboter einen vorbestimmten Sicherheitsabstand um das Objekt einhalten, um dessen Beschädigung zu vermeiden.

Die zweite Strategie wird üblicherweise angewandt, wenn von dem Objekt eine latente Gefahr für den Betrieb des Bodenroboters ausgeht. Beispielsweise kann der Bodenroboter das Befahren von Teppichfransen oder eines losen Kabels vermeiden, um sich darin nicht zu verfangen. Umfährt der Bodenroboter das Objekt in größerem Abstand, so bleibt ein substanzieller unbearbeiteter Bereich um das Objekt herum zurückbleibt. Insbesondere wenn auf einer zu bearbeitenden Bodenfläche mehrere solche Objekte liegen, kann ein Nutzen des Bodenroboters merklich reduziert sein.

DE 10 2011 000 536 A1 schlägt einen Bodenroboter vor, der dazu eingerichtet ist, eine befahrene Bodenfläche mittels eines Rasters in Teilbereiche aufzuteilen und Abstände zu Hindernissen auf der Bodenfläche anhand der Unterteilung zu bestimmen.

Die Druckschriften CN 110 966 982 A, US 9 373 169 B2 und Hachiya Hirotaka et al: "Distance estimation with 2.5D anchors and its application to robot navigation", ROBOMECH Journal, Bd. 5, Nr. 1, 10. September 2018 (2018-09-10), XP093287746, ISSN: 2197-4225, DOI: 10.1186/s40648-018-0119-5, beschreiben Verfahren zum Bestimmen eines Abstands eines Objekts von einem Roboter.

Eine der vorliegenden Erfindung zu Grunde liegende Aufgabe besteht in der Bereitstellung einer verbesserten Technik zur Steuerung eines Bodenroboters bezüglich eines Objekts in seinem Umfeld. Die Erfindung löst diese Aufgabe mittels der Gegenstände der unabhängigen Ansprüche. Unteransprüche geben bevorzugte Ausführungsformen wieder.

Nach einen ersten Aspekt der vorliegenden Erfindung umfasst ein Verfahren zum Steuern eines Bodenroboters in einem Umfeld, in welchem sich ein Objekt befindet, Schritte des Erstellens eines Abbilds des Umfelds mittels einer am Bodenroboter angebrachten Abtasteinrichtung; des Bestimmens einer Repräsentation des Objekts auf dem Abbild; des Bestimmens einer Begrenzung der Repräsentation auf dem Abbild; und des Bestimmens eines Abstands des Objekts vom Bodenroboter auf der Basis einer Lage der Begrenzung auf dem Abbild und einer Lage der Abtasteinrichtung am Bodenroboter, wobei eine Höhe des Objekts auf der Basis einer vertikalen Erstreckung der Begrenzung auf dem Abbild bestimmt wird, eine Breite des Objekts auf der Basis einer horizontalen Erstreckung der Begrenzung auf dem Abbild bestimmt wird, das Objekt auf der Basis der Repräsentation in der Begrenzung mittels eines darauf trainierten künstlichen neuronalen Netzwerks erkannt wird, bestimmt wird, ob das Objekt für den Betrieb des Bodenroboters relevant ist, wobei das Bestimmen des Abstands des Objekts vom Bodenroboter nur dann ausgeführt wird, wenn bestimmt wurde, dass das Objekt relevant ist, und wobei der Bodenroboter bezüglich eines als relevant bestimmten Objekts dazu angesteuert wird, in einer vorbestimmten Weise auf das Objekt unter Berücksichtigung der bestimmten Abmessungen des Objekts oder des bestimmten Abstands des Objekts vom Bodenroboter zu reagieren.

Der Bodenroboter ist dazu eingerichtet, das Objekt im Umfeld zu erkennen. Das Erstellen des Abbilds, das Bestimmen der Repräsentation und das Bestimmen der Begrenzung (bounding box) können Teile eines Erkennungsalgorithmus sein. Die tatsächliche Erkennung des Objekts erfolgt dann bezüglich der Repräsentation in der Begrenzung. Hierzu wird ein darauf trainiertes künstliches neuronales Netzwerk (KNN) verwendet.

Für das Verfahren können geometrische Verhältnisse ausgenützt werden, unter denen eine insbesondere monokulare Abtasteinrichtung am Bodenroboter angebracht ist. Eine Konstellation des Bodenroboters bezüglich des Objekts kann dann anhand von geometrischen Zusammenhängen auf dem Abbild verbessert abgelesen werden. Maße und Winkel relevanter geometrischer Zusammenhänge können auf der Basis trigonometrischer Betrachtungen bestimmt werden. Der Abstand des Bodenroboters zum Objekt kann so mit verbesserter Genauigkeit bestimmt werden.

Für das Verfahren kann praktisch eine beliebige Abtasteinrichtung verwendet werden, die dazu eingerichtet ist, ein Abbild des Umfelds des Bodenroboters bereitzustellen. Beispielsweise kann die Abtasteinrichtung eine optische Kamera, einen Radarsensor, einen LiDAR-Sensor oder einen Ultraschallsensor umfassen. Das Abbild ist bevorzugt zweidimensional und umfasst eine Vielzahl Bildelemente (Pixel), denen jeweils ein Sensorwert der Abtasteinrichtung zugeordnet sein kann.

Es ist bevorzugt, dass der Abstand eines Fußpunkts des Objekts auf der Basis einer Lage eines unteren Endes der Begrenzung auf dem Abbild bestimmt wird. Die Abtasteinrichtung ist bevorzugt derart ausgerichtet, dass sie einen vor dem Bodenroboter liegenden Abschnitt einer Bodenfläche erfasst. Eine Lage des unteren Endes der Begrenzung auf dem Abbild kann daher einen Hinweis auf den Abstand des Fußpunkts des Objekts liefern.

Weiter bevorzugt wird der Abstand auf der Basis einer Höhe der Abtasteinrichtung über eine Bodenfläche bestimmt, auf dem der Bodenroboter steht oder fährt. Bevorzugt steht auch das Objekt auf der Bodenfläche. Die Abtasteinrichtung ist üblicherweise in einer Höhe von ca. 5 bis 10 cm über der Bodenfläche angebracht. Ein Entfernungsbereich, in welchem das Verfahren vorteilhaft durchgeführt werden kann, kann von der Höhe abhängig sein. In Versuchen wurde bestimmt, dass eine kürzeste bestimmbare Entfernung eines Objekts zu einem üblichen Bodenroboter ca. 5 bis ca. 20 cm beträgt. Eine maximal bestimmbare Entfernung liegt bei ca. 3 m. Der Bodenroboter ist bevorzugt dazu eingerichtet, in einem Haushalt eingesetzt zu werden, sodass dieser Entfernungsbereich komfortabel für die Hindernisvermeidung oder Navigation des Bodenroboters eingesetzt werden kann.

Weiter bevorzugt wird der Abstand auf der Basis einer vertikalen Ausrichtung der Abtasteinrichtung bezüglich der Bodenfläche bestimmt. Eine optische Achse der Abtasteinrichtung verläuft bevorzugt parallel zur Bodenfläche.

Der Abstand kann ferner auf der Basis eines Öffnungswinkels eines Abtastbereichs der Abtasteinrichtung bestimmt werden. Der Öffnungswinkel wird durch die optische Achse bevorzugt halbiert. Der Öffnungswinkel der Abtasteinrichtung ist eine charakteristische Eigenschaft, die üblicherweise bekannt ist oder leicht experimentell bestimmt werden kann. Umfasst die Abtasteinrichtung eine optische Kamera, so kann der Öffnungswinkel auf der Basis einer Brennweite bestimmt werden. Üblicherweise kann davon ausgegangen werden, dass der Öffnungswinkel der Abtasteinrichtung an einem Bodenroboter konstant ist. Sollte der Öffnungswinkel variabel sein, so kann er als zusätzlicher Parameter berücksichtigt werden. So kann beispielsweise eine optische Abtasteinrichtung mit einem Objektiv mit variabler Brennweite eingesetzt werden.

Es ist weiter erfindungsgemäß, dass eine Höhe des Objekts auf der Basis einer vertikalen Erstreckung der Begrenzung auf dem Abbild bestimmt wird. Dazu kann die bereits bestimmte Entfernung zum Objekt zu Grunde gelegt werden. In entsprechender Weise wird auch eine Breite des Objekts auf der Basis einer horizontalen Erstreckung der Begrenzung auf dem Abbild bestimmt.

Das Verfahren umfasst ein Steuern des Bodenroboters bezüglich des Objekts. Beispielsweise kann der Bodenroboter dazu eingerichtet sein, eine Bodenfläche um das Objekt herum zu bearbeiten.

Weiter bevorzugt wird der Bodenroboter derart gesteuert, dass er einen vorbestimmten Mindestabstand zum Objekt einhält. Der Mindestabstand kann klein gewählt sein und beispielsweise im Bereich von wenigen Zentimetern liegen. Durch die Kenntnis des Abstands bzw. der Größe des Objekts kann der Bodenroboter verbessert an das Objekt heran gesteuert werden, ohne das Objekt selbst zu berühren. So kann beispielsweise die Bodenfläche um das Objekt herum verbessert bzw. zu einem größeren Anteil durch den Bodenroboter bearbeitet werden.

Nach einem weiteren Aspekt der vorliegenden Erfindung umfasst ein Bodenroboter, insbesondere zum Einsatz in einem Haushalt, eine Abtasteinrichtung, die am Bodenroboter angebracht ist, wobei die Abtasteinrichtung dazu eingerichtet ist, ein Abbild des Umfelds des Bodenroboters bereitzustellen; und eine Verarbeitungseinrichtung. Dabei ist die Verarbeitungseinrichtung dazu eingerichtet, eine Repräsentation des Objekts auf dem Abbild zu bestimmen; eine Begrenzung der Repräsentation auf dem Abbild zu bestimmen; und einen Abstand des Objekts vom Bodenroboter auf der Basis einer Lage der Begrenzung auf dem Abbild und der Lage der Abtasteinrichtung am Bodenroboter zu bestimmen, wobei eine Höhe des Objekts auf der Basis einer vertikalen Erstreckung der Begrenzung auf dem Abbild bestimmt wird, eine Breite des Objekts auf der Basis einer horizontalen Erstreckung der Begrenzung auf dem Abbild bestimmt wird, das Objekt auf der Basis der Repräsentation in der Begrenzung mittels eines darauf trainierten künstlichen neuronalen Netzwerks erkannt wird, und bestimmt wird, ob das Objekt für den Betrieb des Bodenroboters relevant ist, wobei der Abstand des Objekts vom Bodenroboter nur dann bestimmt wird, wenn bestimmt wurde, dass das Objekt relevant ist, und wobei weiter der Bodenroboter bezüglich eines als relevant bestimmten Objekts dazu angesteuert wird, in einer vorbestimmten Weise auf das Objekt unter Berücksichtigung der bestimmten Abmessungen des Objekts oder des bestimmten Abstands des Objekts vom Bodenroboter zu reagieren.

Die Verarbeitungseinrichtung kann dazu eingerichtet sein, ein hierin beschriebenes Verfahren ganz oder teilweise auszuführen. Dazu kann die Verarbeitungseinrichtung elektronisch ausgeführt sein und beispielsweise einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Nach einer besonders bevorzugten Ausführungsform umfasst der Bodenroboter eine Einrichtung zur Bearbeitung einer Bodenfläche. Der Bodenroboter kann über die Bodenfläche fahren und diese mittels der Einrichtung bearbeiten. Die Einrichtung kann beispielsweise eine Saugeinrichtung, eine Wischeinrichtung oder eine Kehreinrichtung umfassen. Die Verarbeitungseinrichtung kann dazu eingerichtet sein, den Bodenroboter in einen geringen Abstand zum Objekt zu bringen, ohne das Objekt zu berühren. So kann die Bodenfläche im Bereich des Objekts verbessert bearbeitet werden.

Die Erfindung wird nun unter Bezug auf die beiliegenden Figuren genauer beschrieben, in denen:
- Figur 1: einen Bodenroboter und ein Objekt;
- Figur 2: ein Ablaufdiagramm eines Verfahrens; und
- Figur 3: geometrische Zusammenhänge zwischen einer Abtasteinrichtung und einem Objekt
darstellt.

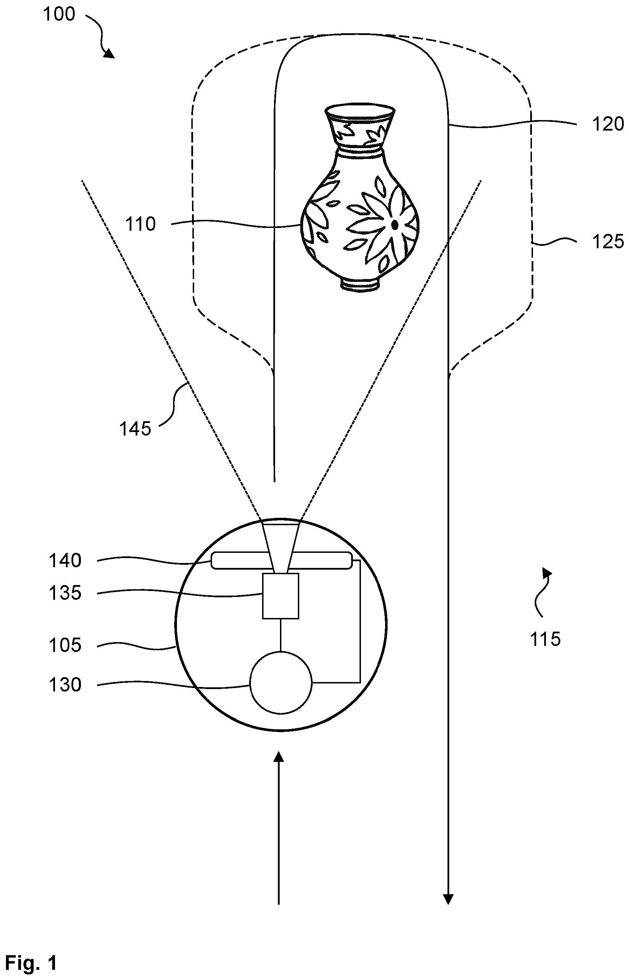

Figur 1 zeigt einen Haushalt 100, in welchem sich ein Bodenroboter 105 und ein Objekt 110 befinden. Obwohl der Bodenroboter 105 kreisrund dargestellt ist, können seine Umrisse in horizontaler Richtung auch eine andere Form bilden, beispielsweise eine D-Form. Der Bodenroboter 105 ist dazu eingerichtet, auf einer Bodenfläche 115 zu fahren, auf der das Objekt 110 stehen kann. Das Objekt 110 ist beispielhaft als Vase dargestellt. Allgemein kann das Objekt 110 ein beliebiges Objekt umfassen, das vom Bodenroboter 105 nicht berührt werden soll. Beispielsweise kann das Objekt 110 einen empfindlichen oder kostbaren Gegenstand umfassen, wie durch die Vase angedeutet ist. Der Gegenstand 110 kann auch für einen Betrieb des Bodenroboters 105 gefährlich sein und beispielsweise eine Bodenunebenheit, einen langflorigen Teppich oder eine Türschwelle umfassen. Das Objekt 110 kann auch aus anderen Gründen für den Bodenroboter 105 zu vermeiden sein, beispielsweise wenn es sich um Hinterlassenschaften eines Haustiers handelt.

Der Bodenroboter 105 fährt die Bodenfläche 115 üblicherweise auf einem vorbestimmten Pfad 120 ab. Der Pfad 120 ist allgemein so gewählt, dass die Bodenfläche 115 effizient und lückenlos bearbeitet werden kann, beispielsweise in Form eines Mäanders. Der Pfad 120 ist in Figur 1 mit einer durchgezogenen Linie dargestellt. Im Bereich des Objekts 110 kann stattdessen einem angepassten Pfad 125 gefolgt werden, um zu vermeiden, dass der Bodenroboter 105 das Objekt 110 touchiert. Dazu muss eine Größe des Objekts 110 bzw. ein Abstand zwischen dem Bodenroboter 105 und dem Objekt 110 an einer vorbestimmten Stelle entlang des Pfads 120 bestimmt werden.

Der Bodenroboter 105 umfasst bevorzugt eine Verarbeitungseinrichtung 130 und eine Abtasteinrichtung 135. Darüber hinaus ist bevorzugt eine Bearbeitungseinrichtung 140 zur Bearbeitung der Bodenfläche 115 vorgesehen.

Die Abtasteinrichtung 135 umfasst bevorzugt einen bildgebenden Sensor für ein Umfeld des Bodenroboters 105. Beispielsweise kann die Abtasteinrichtung 135 eine monokulare oder eine Stereokamera, eine ToF-Kamera oder einen LiDAR-Sensor umfassen. Ein Erfassungsbereich 145 der Abtasteinrichtung 135 ist mit einer fein unterbrochenen Linie angedeutet. Die Abtasteinrichtung 135 ist in einer vorbestimmten Stellung am Bodenroboter 105 angebracht. Üblicherweise liegt diese in Fahrtrichtung vorne, horizontal mittig und an einem oberen Ende des Bodenroboters 105. Eine Ausrichtung der Abtasteinrichtung 135 gegenüber dem Bodenroboter 105 sowie eine Brennweite bzw. ein Öffnungswinkel eines Abtastbereichs sind üblicherweise fest vorbestimmt.

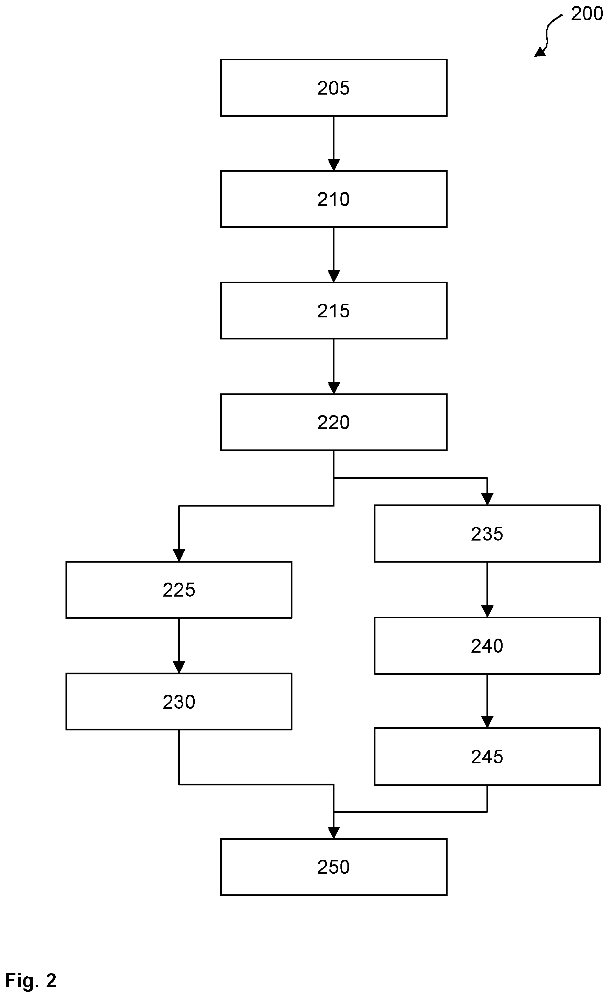

Figur 2 zeigt ein Ablaufdiagramm eines beispielhaften Verfahrens 200 zum Steuern eines Bodenroboters 105. In einem Schritt 205 kann ein Umfeld des Bodenroboters 105 abgetastet werden. Die Abtastung erfolgt mittels der Abtasteinrichtung 135. In einem Schritt 210 kann auf der Basis von Sensordaten, die während der Abtastung anfallen, ein Abbild hergestellt werden. Das Abbild umfasst bevorzugt eine zweidimensionale, regelmäßige Anordnung gleichgroßer Bildelemente. Jedem Bildelement kann ein Sensorwert oder ein Wert zugeordnet werden, der auf der Basis mehrerer Sensorwerte bestimmt ist. Dieser Schritt kann seitens der Abtasteinrichtung 135 durchgeführt werden.

In einem Schritt 215 kann auf dem Abbild eine Repräsentation des Objekts 110 bestimmt werden. Dazu kann ein beliebiger Algorithmus verwendet werden, der beispielsweise klassisch mittels Mustererkennung oder mittels Methoden des maschinellen Lernens arbeitet.

In einem Schritt 220 kann eine Begrenzung um die Repräsentation auf dem Abbild bestimmt werden. Die Begrenzung ist üblicherweise rechteckig und kann auch bounding box genannt werden. Dabei wird versucht, eine Begrenzung zu finden, welche die Repräsentation des Objekts 110 vollständig umfasst, dabei aber möglichst wenig Inhalt des Abbilds einschließt, der nicht durch die Repräsentation des Objekts 110 gebildet ist. Anders ausgedrückt kann ein möglichst enger Rahmen um die Repräsentation des Objekts 110 bestimmt werden. Seiten des Rahmens verlaufen dabei bevorzugt horizontal bzw. vertikal.

In einem Schritt 225 kann auf der Basis der Repräsentation in dem Rahmen das Objekt 110 erkannt werden. Dieser Schritt wird mittels eines dazu trainierten KNN durchgeführt. Das KNN kann dazu eingerichtet sein, eine Vielzahl vorbestimmter Objekte zu erkennen, die üblicherweise in einem Haushalt 100 angetroffen werden können. Dazu können beispielsweise Möbel, Wände, Türen, Fenster, Teppiche oder Vorhänge zählen. Weiter erkennbare Objekt können Dekorationsartikel, Kleidungsstücke, Kabel, Teppiche, Schwellen oder Haustiere umfassen. Optional kann das Erkennen weiterer Objekte 110 in einem konkreten Haushalt 100 weiter trainiert werden.

In einem Schritt 230 wird bestimmt, ob das Objekt 110 für den Betrieb des Bodenroboters 105 relevant ist. Ein relevantes Objekt 110 soll durch den Bodenroboter 105 nicht berührt werden, wobei der Bodenroboter 105 im Rahmen seiner Aufgabe möglichst nahe an das Objekt 110 fahren soll.

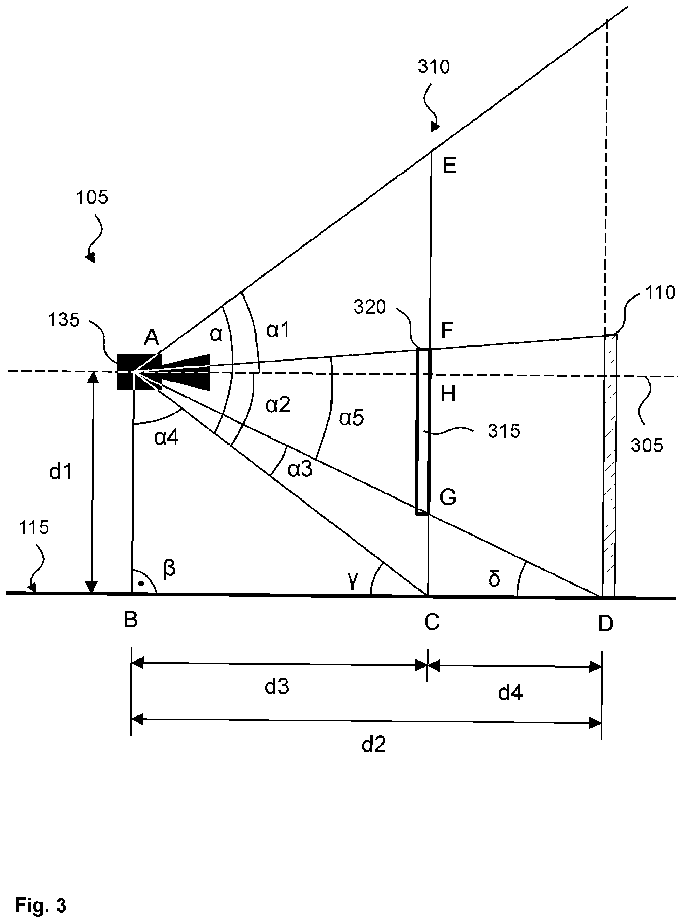

In einem Schritt 235 kann eine Entfernung zwischen dem Bodenroboter 105 und dem Objekt 110 bestimmt werden. Dieser Schritt wird jedoch nur dann durchgeführt, wenn im Schritt 230 bestimmt wurde, dass das Objekt 110 relevant ist. Die Entfernung zum Objekt 110 kann auf der Basis geometrischer Zusammenhänge bestimmt werden, die mit Bezug auf Figur 3 näher erläutert werden.

In einem Schritt 240 wird auf der Basis der bestimmten Entfernung zum Objekt 110 eine Höhe des Objekts 110 bestimmt. In ähnlicher Weise wird in einem Schritt 245 eine Breite des Objekts 110 bestimmt.

In einem Schritt 250 kann der Bodenroboter 105 dazu angesteuert werden, in einer vorbestimmten Weise auf das Objekt 110 zu reagieren. Insbesondere kann der Bodenroboter 105 dazu gesteuert werden, das Objekt 110 in möglichst kleinem Abstand zu umfahren. Dazu können bestimmte Abmessungen des Objekts 110 oder ein Abstand des Objekts 110 vom Bodenroboter 105 berücksichtigt werden. Geometrische Erkenntnisse über das Objekt 110 können mit Informationen zusammengeführt werden, die der Bodenroboter 105 über sein Umfeld bereits hat. Diese Informationen können insbesondere Kartendaten des Haushalts 100 umfassen. Optional kann das Objekt 110 auch in die Kartendaten eingetragen werden.

Figur 3 zeigt geometrische Zusammenhänge zwischen einer Abtasteinrichtung 135 eines Bodenroboters 105 und einem Objekt 110. Der Bodenroboter 105 und das Objekt 110 stehen auf der Bodenfläche 115. Die Abtasteinrichtung 135 ist in einer vorbestimmten Höhe d1 über der Bodenfläche 115 angebracht. Eine optische Achse 305 der Abtasteinrichtung 135 erstreckt sich bevorzugt parallel zur Bodenfläche 115 in horizontaler Richtung.

Eine Sensorebene der Abtasteinrichtung 135 liegt über einem Fußpunkt B auf der Bodenfläche 115. Eine gedachte Mitte der Sensorebene ist als Punkt A bezeichnet. Eine Verbindungslinie zwischen A und B steht senkrecht auf der Bodenfläche 115. Ein an B eingezeichneter Winkel β beträgt 90°. Ein Fußpunkt des Objekts 110 bildet einen Punkt D auf der Bodenfläche 115. Ein Abstand zwischen den Punkten B und D beträgt d2.

Schematisch ist eine Darstellungs- oder Bildebene 310 eingezeichnet, die vertikal verläuft und sich in horizontaler Richtung zwischen der Abtasteinrichtung 135 und dem Objekt 110 befindet. Die gewählte Darstellung bezieht sich auf einen beispielhaften Abtastwinkel der Abtasteinrichtung 135 in vertikaler Richtung. Dieser Abtastbereich ist durch einen Öffnungswinkel α bestimmt, der durch die optische Achse 305 in zwei gleichgroße Winkel α1 und α2 unterteilt ist.

Das Objekt 110 bildet eine Repräsentation 315 in der Bildebene 310. Mit einer breiten Linie angedeutet ist eine Begrenzung (bounding box) 320, von der in Figur 3 nur die vertikale Abmessung relevant ist.

Die Bildebene 310 schneidet die Bodenfläche 115 in einem Punkt C. Dieser teilt die Strecke d2 in Abschnitte d3 und d4. Ein durch die Abtasteinrichtung 135 nicht erfassbarer Bereich ist durch das Dreieck ABC gebildet. Dieses schließt bei A einen Winkel α4 und bei C einen Winkel γ ein.

Ein unteres Ende der Begrenzung 320 in der Bildebene 310 ist durch einen Punkt G repräsentiert. Ein oberes Ende der Begrenzung 320 entspricht einem Punkt F. Ein Punkt H bezeichnet einen Mittelpunkt der Bildebene 310 wo die optische Achse 305 der Kamera 135 in einem rechten Winkel auf die Bildebene 310 trifft. Ein Punkt E entspricht dem an der optischen Achse 305 gespiegelten Punkt G. Bezüglich A schließen die Punkte F und G einen Winkel α5 ein. Ein Dreieck ACD schließt an A einen Winkel α3 und an D einen Winkel δ ein.

In Figur 3 gelten geometrische und insbesondere trigonometrische Zusammenhänge, die zur Bestimmung des gesuchten Abstands d2 verwendet werden können. Unter Annahme eines konstanten Abtastwinkels α und einer festen Position der Abtasteinrichtung 135 am Bodenroboter 105 sind die Abstände d1 und d3 konstant und können als bekannt vorausgesetzt werden. Es gilt: $Winkel BDA = arctan \left(d1/d2\right) = δ ;$

In Kenntnis des vertikalen Öffnungswinkels des Sichtfelds der Kamera 135, einer Auflösung in Bildelementen oder Bildpunkten, α und d1 können die Winkel FAG (= α5), CAD (= α3), ACB (= γ), BAC (= α4) und ACF (α3 + α5) bestimmt werden. Dann können mittels des Sinussatzes und den genannten Parametern die Abstände d3 und d4 bestimmt werden. Deren Summe entspricht dem Abstand d2 zwischen dem Bodenroboter 105 (an der Stelle der Sensorebene der Abtasteinrichtung 135) und dem Objekt 110.

Optional können noch andere geometrische Zusammenhänge ausgenutzt werden, um den Abstand d2 zu bestimmen. Dieselben Ergebnisse können auch mittels anderer gängiger Zusammenhänge in der gezeigten Anordnung erlangt werden, wobei die Zusammenhänge insbesondere Eigenschaften von Dreiecken, Trigonometrie, Eigenschaften von parallelen Linien, der Koordinatengeometrie oder anderer anwendbarer mathematischer Konzepte umfassen können.

Das hierin vorgestellte Konzept kann auch angepasst werden, um dieselben Ergebnisse zu erlangen, wenn der Winkel, mit dem die Kamera 135 bzw. ihre optische Achse 305 gegenüber der Bodenfläche 115 geneigt ist, bekannt ist. Das Konzept kann direkt angewendet werden, um eine Breite des Objekts 110 auf der Basis ähnlicher bzw. entsprechender geometrischer Zusammenhänge bezüglich eines horizontalen Sichtfelds der Kamera 135 zu bestimmen.

### Bezugszeichen

- 100: Haushalt
- 105: Bodenroboter
- 110: Objekt
- 115: Bodenfläche
- 120: Pfad
- 125: angepasster Pfad
- 130: Verarbeitungseinrichtung
- 135: Abtasteinrichtung
- 140: Bearbeitungseinrichtung
- 145: Erfassungsbereich

- 200: Verfahren
- 205: Umfeld abtasten
- 210: Abbild erstellen
- 215: Repräsentation erfassen
- 220: Begrenzung / Rahmen erstellen
- 225: Objekt erkennen
- 230: Objekt relevant?
- 235: Entfernung zum Objekt bestimmen
- 240: Höhe des Objekts bestimmen
- 245: Breite des Objekts bestimmen
- 250: Reaktion auf Objekt

- 305: optische Achse
- 310: Bildebene
- 315: Repräsentation
- 320: Begrenzung

- α: Abtastwinkel
- α1 - α6: Winkel
- β: rechter Winkel
- γ: Winkel
- δ: Winkel
- d1-d4: Abstand
- A-G: Punkt

## Patentansprüche

1. Verfahren (200) zum Steuern eines Bodenroboters (105) auf einer Bodenfläche (115) in einem Umfeld, in welchem und auf welcher sich ein Objekt (110) befindet, wobei das Verfahren (200) folgende Schritte umfasst:
- Erstellen (210) eines Abbilds des Umfelds mittels einer am Bodenroboter (105) angebrachten Abtasteinrichtung (135), deren optische Achse (305) sich parallel zu der Bodenfläche (115) in horizontaler Ebene erstreckt;
- Bestimmen (215) einer Repräsentation (315) des Objekts (110) auf dem Abbild;
- Bestimmen (220) einer Begrenzung (320) der Repräsentation (315) auf dem Abbild; und
- Bestimmen (235) eines Abstands (d2) des Objekts (110) vom Bodenroboter (105) auf der Basis einer Lage der Begrenzung (320) auf dem Abbild und einer Lage der Abtasteinrichtung (135) am Bodenroboter (105), wobei
- eine Höhe des Objekts (110) auf der Basis einer vertikalen Erstreckung (FG) der Begrenzung (320) auf dem Abbild bestimmt wird; und
- eine Breite des Objekts (110) auf der Basis einer horizontalen Erstreckung der Begrenzung (320) auf dem Abbild bestimmt wird; **gekennzeichnet durch** ein
- Erkennen des Objekts (110) auf der Basis der Repräsentation (315) in der Begrenzung (320) mittels eines darauf trainierten künstlichen neuronalen Netzwerks,
- Bestimmen (230), ob das Objekt (110) für den Betrieb des Bodenroboters (105) relevant ist, wobei
- das Bestimmen (235) des Abstands (d2) des Objekts (110) vom Bodenroboter (105) nur dann ausgeführt wird, wenn bestimmt wurde, dass das Objekt (110) relevant ist, und
- Ansteuern des Bodenroboters (105) bezüglich eines als relevant bestimmten Objekts (110) dazu, in einer vorbestimmten Weise auf das Objekt (110) unter Berücksichtigung der bestimmten Abmessungen des Objekts (110) oder des bestimmten Abstands (d2) des Objekts (110) vom Bodenroboter (105) zu reagieren.

2. Verfahren (200) nach Anspruch 1, wobei der Abstand (d2) eines Fußpunkts (D) des Objekts (110) auf der Basis einer Lage eines unteren Endes (G) der Begrenzung (320) auf dem Abbild bestimmt wird.

3. Verfahren (200) nach Anspruch 2, wobei der Abstand (d2) auf der Basis einer Höhe (d1) der Abtasteinrichtung (135) über der Bodenfläche (115) bestimmt wird, auf dem der Bodenroboter (105) steht.

4. Verfahren (200) nach Anspruch 3, wobei der Abstand (d2) auf der Basis einer vertikalen Ausrichtung der Abtasteinrichtung (135) bezüglich der Bodenfläche (115) bestimmt wird.

5. Verfahren (200) nach Anspruch 3 oder 4, wobei der Abstand (d2) auf der Basis eines Öffnungswinkels (α) eines Abtastbereichs (145) der Abtasteinrichtung (135) bestimmt wird.

6. Verfahren (200) nach einem der vorangehenden Ansprüche, wobei der Bodenroboter (105) derart gesteuert wird, dass er einen vorbestimmten Mindestabstand zum Objekt (110) einhält.

7. Bodenroboter (105) auf einer Bodenfläche (115), umfassend
- eine Abtasteinrichtung (135), die am Bodenroboter (105) angebracht ist, und deren optische Achse (305) sich parallel zu der Bodenfläche (115) in horizontaler Ebene erstreckt;
- wobei die Abtasteinrichtung (135) dazu eingerichtet ist, ein Abbild des Umfelds des Bodenroboters (105) bereitzustellen;
- eine Verarbeitungseinrichtung (130), die dazu eingerichtet ist,
∘ eine Repräsentation (315) des Objekts (110) auf dem Abbild zu bestimmen;
∘ eine Begrenzung (320) der Repräsentation (315) auf dem Abbild zu bestimmen; und
∘ einen Abstand (d2) des Objekts (110) vom Bodenroboter (105) auf der Basis einer Lage der Begrenzung (320) auf dem Abbild und der Lage der Abtasteinrichtung (135) am Bodenroboter (105) zu bestimmen, wobei
∘ **eine Höhe** des Objekts (110) auf der Basis einer vertikalen Erstreckung (FG) der Begrenzung (320) auf dem Abbild bestimmt wird, und
∘ eine Breite des Objekts (110) auf der Basis einer horizontalen Erstreckung der Begrenzung (320) auf dem Abbild bestimmt wird, **dadurch gekennzeichnet, dass**
∘ das Objekt (110) auf der Basis der Repräsentation (315) in der Begrenzung (320) mittels eines darauf trainierten künstlichen neuronalen Netzwerks erkannt wird, und
∘ bestimmt wird, ob das Objekt (110) für den Betrieb des Bodenroboters (105) relevant ist, wobei der Abstand (d2) des Objekts (110) vom Bodenroboter (105) nur dann bestimmt wird, wenn bestimmt wurde, dass das Objekt (110) relevant ist, wobei weiter
∘ der Bodenroboter (105) bezüglich eines als relevant bestimmten Objekts (110) dazu angesteuert wird, in einer vorbestimmten Weise auf das Objekt (110) unter Berücksichtigung der bestimmten Abmessungen des Objekts (110) oder des bestimmten Abstands (d2) des Objekts (110) vom Bodenroboter (105) zu reagieren.

8. Bodenroboter (105) nach Anspruch 7, ferner umfassend eine Einrichtung (140) zur Bearbeitung einer Bodenfläche (115).

## Claims

1. A method (200) for controlling a floor robot (105) on a floor surface (115) in a surrounding area in which and on which an object (110) is located, wherein the method (200) comprises the following steps:
- creating (210) an image of the surrounding area by means of a scanning device (135) attached to the floor robot (105), the optical axis (305) of which extends parallel to the floor surface (115) in the horizontal plane;
- determining (215) representation (315) of the object (110) on the image;
- determining (220) a bounding box (320) of the representation (315) on the image; and
- determining (235) a distance (d2) between the object (110) and the floor robot (105) on the basis of a position of the bounding box (320) on the image and a position of the scanning device (135) on the floor robot (105), wherein
- a height of the object (110) is determined on the basis of a vertical extension (FG) of the bounding box (320) on the image; and
- a width of the object (110) is determined on the basis of a horizontal extension of the bounding box (320) on the image; **characterised by**
- identifying the object (110) on the basis of the representation (315) in the bounding box (320) by means of an artificial neural network trained for this purpose,
- determining (230) whether the object (110) is relevant to the operation of the floor robot (105), wherein
- the determination (235) of the distance (d2) between the object (110) and the floor robot (105) is only then executed if it was determined that the object (110) is relevant, and
- actuating the floor robot (105) in relation to an object (110) determined as relevant, for the purpose of responding in a predetermined manner to the object (110) by taking into account the determined dimensions of the object (110) or the determined distance (d2) of the object (110) from the floor robot (105).

2. The method (200) as claimed in claim 1, wherein the distance (d2) of a base point (D) of the object (110) is determined on the basis of a position of a lower end (G) of the bounding box (320) on the image.

3. The method (200) as claimed in claim 2, wherein the distance (d2) is determined on the basis of a height (d1) of the scanning device (135) above the floor surface (115), on which the floor robot (105) is standing.

4. The method (200) as claimed in claim 3, wherein the distance (d2) is determined on the basis of a vertical alignment of the scanning device (135) in relation to the floor surface (115).

5. The method (200) as claimed in claim 3 or 4, wherein the distance (d2) is determined on the basis of an opening angle (α) of a scanning range (145) of the scanning device (135).

6. The method (200) as claimed in one of the preceding claims, wherein the floor robot (105) is controlled such that it retains a predetermined minimum distance from the object (110).

7. A floor robot (105) on a floor surface (115), comprising
- a scanning device (135), which is attached to the floor robot (105), and the optical axis (305) of which extends parallel to the floor surface (115) in the horizontal plane;
- wherein the scanning device (135) is designed to provide an image of the surrounding area of the floor robot (105);
- a processing device (130), which is designed,
∘ to determine a representation (315) of the object (110) on the image;
∘ to determine a bounding box (320) of the representation (315) on the image; and
∘ to determine a distance (d2) of the object (110) from the floor robot (105) on the basis of a position of the bounding box (320) on the image and the position of the scanning device (135) on the floor robot (105), wherein
∘ a height of the object (110) is determined on the basis of a vertical extension (FG) of the bounding box (320) on the image, and
∘ a width of the object (110) is determined on the basis of a horizontal extension of the bounding box (320) on the image, **characterized in that**
∘ the object (110) is identified on the basis of the representation (315) in the bounding box (320) by means of an artificial neural network trained for this purpose, and
∘ it is determined whether the object (110) is relevant to the operation of the floor robot (105), wherein the distance (d2) of the object (110) from the floor robot (105) is only then determined if it was determined that the object (110) is relevant, wherein furthermore
∘ the floor robot (105) is controlled in relation to an object (110) determined as relevant to respond in a predetermined manner to the object (110) by taking into account the determined dimensions of the object (110) or the determined distance (d2) of the object (110) from the floor robot (105).

8. The floor robot (105) as claimed in claim 7, further comprising a device (140) for treating a floor surface (115).

## Revendications

1. Procédé (200) de pilotage d'un robot de sol (105) sur une surface de sol (115) dans un environnement dans lequel et sur laquelle se trouve un objet (110), dans lequel le procédé (200) comprend les étapes consistant à :
- créer (210) une image de l'environnement à l'aide d'un dispositif de balayage (135) monté sur le robot de sol (105), dont l'axe optique (305) s'étend parallèlement à la surface de sol (115) dans un plan horizontal ;
- déterminer (215) une représentation (315) de l'objet (110) sur l'image ;
- déterminer (220) un contour (320) de la représentation (315) sur l'image ; et
- déterminer (235) une distance (d2) séparant l'objet (110) du robot de sol (105) sur la base d'une position du contour (320) sur l'image et une position du dispositif de détection (135) sur le robot de sol (105), dans lequel
- une hauteur de l'objet (110) est déterminée sur la base d'une extension verticale (FG) du contour (320) sur l'image ; et
- une largeur de l'objet (110) est déterminée sur la base d'une extension horizontale du contour (320) sur l'image ; **caractérisé en ce qu'**il comprend en outre les étapes consistant à :
- reconnaître l'objet (110) sur la base de la représentation (315) à l'intérieur du contour (320) au moyen d'un réseau neuronal artificiel préalablement entraîné à cet effet ;
- déterminer (230) si l'objet (110) est pertinent pour le fonctionnement du robot de sol (105), dans lequel
- la détermination (235) de la distance (d2) entre l'objet (110) et le robot de sol (105) n'est exécutée que s'il a été déterminé que l'objet (110) est pertinent ; et
- piloter le robot de sol (105) par rapport à un objet (110) déterminé comme étant pertinent de manière à réagir à l'objet (110) selon un mode prédéterminé, en tenant compte des dimensions déterminées de l'objet (110) ou de la distance déterminée (d2) entre l'objet (110) et le robot de sol (105).

2. Procédé (200) selon la revendication 1, dans lequel la distance (d2) d'un point de base (D) de l'objet (110) est déterminée sur la base de la position d'une extrémité inférieure (G) du contour (320) sur l'image.

3. Procédé (200) selon la revendication 2, dans lequel la distance (d2) est déterminée sur la base d'une hauteur (d1) du dispositif de balayage (135) au-dessus de la surface de sol (115) sur laquelle se trouve le robot de sol (105).

4. Procédé (200) selon la revendication 3, dans lequel la distance (d2) est déterminée sur la base d'une orientation verticale du dispositif de balayage (135) par rapport à la surface de sol (115).

5. Procédé (200) selon la revendication 3 ou 4, dans lequel la distance (d2) est déterminée sur la base d'un angle d'ouverture (α) d'une zone de balayage (145) du dispositif de balayage (135).

6. Procédé (200) selon l'une quelconque des revendications précédentes, dans lequel le robot de sol (105) est piloté de manière à maintenir une distance minimale prédéterminée par rapport à l'objet (110).

7. Robot de sol (105) sur une surface de sol (115), comprenant
- un dispositif de balayage (135) monté sur le robot de sol (105), dont l'axe optique (305) s'étend parallèlement à la surface de sol (115) dans un plan horizontal ;
- dans lequel le dispositif de balayage (135) est configuré pour fournir une image de l'environnement du robot de sol (105) ;
- une unité de traitement (130) configurée pour
∘ déterminer une représentation (315) de l'objet (110) sur l'image ;
∘ déterminer un contour (320) de la représentation (315) sur l'image ; et
∘ déterminer une distance (d2) entre l'objet (110) et le robot de sol (105) sur la base de la position du contour (320) sur l'image et de la position du dispositif de balayage (135) sur le robot de sol (105), dans lequel
∘ une hauteur de l'objet (110) est déterminée sur la base d'une extension verticale (FG) du contour (320) sur l'image, et
∘ une largeur de l'objet (110) est déterminée sur la base d'une extension horizontale du contour (320) sur l'image, **caractérisé en ce que**
∘ l'objet (110) est reconnu sur la base de la représentation (315) à l'intérieur du contour (320) au moyen d'un réseau neuronal artificiel préalablement entraîné à cet effet ; et
∘ il est déterminé si l'objet (110) est pertinent pour le fonctionnement du robot de sol (105), dans lequel la distance (d2) entre l'objet (110) et le robot de sol (105) n'est déterminée que s'il a été établi que l'objet (110) est pertinent ; et
∘ le robot de sol (105) est en outre piloté, par rapport à un objet (110) déterminé comme étant pertinent, de manière à réagir à l'objet (110) selon un mode prédéterminé, en tenant compte des dimensions déterminées de l'objet (110) ou de la distance déterminée (d2) entre l'objet (110) et le robot de sol (105).

8. Robot de sol (105) selon la revendication 7, comprenant en outre un dispositif (140) destiné au traitement d'une surface de sol (115).
